# EUROPEAN PATENT SPECIFICATION

(11) **EP 2 759 806 B1**
(45) Date of publication and mention of the grant of the patent: **16.12.2020**
(21) Application number: 13305098.9
(22) Date of filing: 29.01.2013
(51) Int. Cl.: G01F 1/66, G01F 15/00

(54) **Ultrasonic flow meter**
Ultraschall-Durchflussmesser
Débitmètre à ultrasons

(43) Date of publication of application: 30.07.2014
(73) Proprietor: Itron Global SARL, Liberty Lake WA 99019 (US)
(72) Inventor: Caciu, Costin, 92130 Issy-les Moulinaux (FR); Bouzid, Tarek, 92130 Issy-les Moulinaux (FR); Coudurier-Curveur, Xavier, 92130 Issy-les Moulinaux (FR); Schwenter, Sebastien, 92130 Issy-les Moulinaux (FR); Seve, Antoine, 92130 Issy-les Moulinaux (FR)
(74) Representative: Lloyd, Robin

(56) References cited:
- EP-A1- 0 897 102
- WO-A1-97/10490
- DE-U1-202009 011 310
- US-A- 3 817 098

## Description

The present invention relates to an ultrasonic fluid flow meter and a transducer support mounting and a fluid flow stabilizer. The present invention also relates to a flow channel for an ultrasonic fluid flow meter, a transducer body mounting and an ultrasonic transducer support mounting assembly.

Ultrasonic fluid flow meters are known. In order to measure fluid flow rate, such meters are normally configured with a plurality of ultrasonic transducers comprising piezo-ceramics or piezo-crystals, which produce ultrasonic signals when a voltage is applied thereto. Ultrasonic transducers can be configured to transmit and receive ultrasonic signals. Typically, ultrasonic flow meters measure the difference of the transit time of ultrasonic pulses propagating in and against flow direction using the ultrasonic transducers. The signals from the ultrasonic transducers may be output through pulse generation to a receiver device such as a flow integrator. Such fluid flow meters can be used to measure fluid flow rate in a range of fluids, including water. Such meters can be used in energy metering, heating and cooling.

In known ultrasonic fluid flow meters, the ultrasonic transducers are located in or adjoining an internal wall in a pipe in which the fluid is flowing with a view to minimizing pressure head loss in the meter. In the known meters, the transducers are arranged diagonally across from one another in the pipe or alternatively mirrors or other types of reflectors are utilized in order to direct ultrasonic signals through parts of the fluid flow stream between transducers. This can cause a loss of power to the ultrasonic signals due to signal propagation with a resulting increased sensitivity to upstream conditions or meter orientation.

In other known meters, the ultrasonic transducers are provided in a bypass stream to the main fluid flow pipe. This can cause a pressure head loss across the fluid flow meter which can affect the flow being measured.

Known ultrasonic fluid flow meters such as those described in EP1975573 and EP2365295 include a housing formed of plastic to provide electrical decoupling and mounting stability. However, in some applications, for example industrial fluid flow measurement, the fluid in the pipe may have a temperature of up to 180 degrees centigrade and/or have a pressure of up to pipe may have a temperature of up to 180 degrees centigrade and/or have a pressure of up to 40 bar or more. In some instances, the known ultrasonic housing assembly may not be suitable for such conditions.

Document WO97/10490 describes a device for determining the amount of liquid flowing through a piping system. Document US3817098 describes a known apparatus and method for obtaining flow and sound speed data using ultrasonic energy transducers. Document EP0897102 describes a known ultrasound fluid flow meter. Document DE202009011310 describes a known ultrasound flow meter with a universal sensor carrier.

The present invention seeks to alleviate, at least to a certain extent the problems and/or address at least to a certain extent the difficulties associated with the prior art.

Reference to preferable features should be understood to define optional, non-essential features of the invention.

According to a first aspect of the invention, there is provided an ultrasonic fluid flow meter as claimed in claim 1. The meter comprises:
a fluid conduit with an inlet and an outlet, the fluid conduit bound by an inner periphery; and
a first and a second ultrasonic transducer for measuring a fluid flow in the fluid conduit;
wherein the first and second ultrasonic transducers are arranged in facing alignment; and wherein the first and second ultrasonic transducers are arranged within the fluid conduit and spaced from said inner periphery, and wherein each of the first and second ultrasonic transducers are supported by an associated support mounting, and wherein a plurality of fluid apertures are provided around each ultrasonic transducer.

As such, the ultrasonic transducers are located in the fluid flow, preferably in the centre of the fluid flow. In this way, the ultrasonic transducers are positioned within the flow stream or fluid to be measured. In this way, the ultrasonic transducers are less affected by fluid boundary wall effects, easing signal and measurement processing. The ultrasonic transducers may be arranged intermediately in the cross-section or inner periphery of the fluid conduit. The ultrasonic transducers are preferably spaced from all the internal boundary walls or surfaces of the fluid conduit in which they are arranged. The inner periphery preferably defines an inner wall profile of the fluid conduit. Preferably, the fluid conduit is continuous between the inlet and the outlet. The inlet and outlet may be the only fluid inlet and outlet of the fluid conduit,

Preferably, the support mounting defines the fluid apertures. Preferably, the fluid apertures are through apertures. Preferably, the fluid apertures extend parallel to the longitudinal axis of the fluid conduit.

The ultrasonic transducers may be located within the fluid conduit at the inlet and outlet of the fluid conduit or spaced from the inlet or outlet of the fluid conduit within the fluid conduit.

Preferably, the ultrasonic transducers are arranged in the fluid conduit such that, in use, they are located intermediately in the fluid flow in the pipe, such that fluid flows past the ultrasonic transducer in a direction parallel to the line of sight between the first and second transducers.

The first and second ultrasonic transducers are arranged in facing alignment, i.e. with their transmitting/receiving portions opposite one another in order that they may transmit and receive signals between each other. A direct line of sight between the ultrasonic transducers can serve to reduce signal loss due to propagation.

Optionally, the fluid conduit is substantially rotationally symmetric. Advantageously, with this axis symmetry, the orientation of the meter may be changed with minimal adverse effect on measurement accuracy.

The fluid conduit may have a circular cross-section.

The inlet and outlet of the fluid conduit may be sized depending on application and fluid flow rates to be measured. The inlet/outlet diameter may for example be 65mm, 80mm, 100mm, 125mm or 150mm or any other suitable size.

Preferably the first and second ultrasonic transducers are arranged substantially concentrically with respect to the inner periphery of the fluid conduit. In this way, the ultrasonic transducers can advantageously be located within the region of the fluid conduit with the highest fluid speed and preferably away from boundary flow regimes of the fluid conduit. Operating the ultrasonic transducers in such a flow region can serve to reduce measurement inaccuracies. More preferably, the first and second ultrasonic transducers are arranged or located in the centre of the cross-section of the pipe.

The support mounting advantageously serves to maintain the transducers in a physical stable condition and spaced from the inner periphery of the fluid conduit. The support mounting may comprise webs, arms or branches attached or extending to the inner periphery of the fluid conduit. The support mounting may comprise a plurality of radially extending braches, webs or ribs.

Preferably, each support mounting includes a plurality of radially extending webs arranged around said associated ultrasonic transducer. The webs may contact directly with the inner periphery of the fluid conduit so as to form the fluid apertures. As an alternative, the support mounting may comprise a circumferential ring or other such body to which the webs may be connected.

Preferably, the support mounting defines or comprises one or more fluid apertures extending through the support mounting in a direction substantially parallel to the longitudinal axis of the fluid conduit. Such fluid apertures may be provided between ribs, webs or branches of the support mounting which extend radially with respect of the central longitudinal axis of the fluid conduit. Advantageously, such an arrangement permits fluid to pass the ultrasonic transducer. The support mounting may also provide a degree of fluid stabilization before the measurement region of the flow meter.

Preferably, the fluid apertures are formed or provided around the ultrasonic transducer. This allows fluid to readily flow past the ultrasonic transducers and reduce pressure head loss.

Preferably, the fluid apertures are arranged or formed rotationally symmetric about the central longitudinal axis of the fluid conduit. This seeks to reduce the effect of the rotation of the flow meter about its longitudinal axis on the fluid flow and hence metrology measurement allowing greater freedom of installation. The fluid apertures may be formed substantially as sectors of a circle. A radius or curved edges or profiles may be applied to fluid facing surfaces. This seeks to reduce pressure loss.

Preferably, each support mounting comprises: a receiving part for receiving the ultrasonic transducer. The support mounting may also include an internal bore radially extending from the receiving part to an outer peripheral surface of the support mounting. Instead of an internal bore, a wireless transducer may be provided in the support mounting.

The receiving part may be formed as a circular recess or aperture to receive a part of an ultrasonic transducer or a transducer body mounting in which the transducer is contained.

Sealing means, for example, grommets or gaskets may be provided to provide a watertight seal between the outlet of the internal bore and the inner periphery of the fluid conduit. The internal bore may be used to carry a wire, for example a coaxial wire connected to the ultrasonic transducer.

Preferably, within the flow conduit, the fluid flow meter is substantially symmetric about a plane midway between the first and second ultrasonic transducers, the plane extending transverse to the central longitudinal axis of the fluid conduit. Advantageously, with such symmetry, the orientation of the inlet and outlet of the fluid conduit may be changed, i.e. the inlet may become the outlet for example.

Each ultrasonic transducer is provided with a flow stabiliser, each flow stabilizer including a fluid deflecting element for deflecting, in use, fluid flowing in the fluid conduit around the ultrasonic transducer when the flow stabilizer is located in the fluid conduit upstream of the ultrasonic transducer, wherein the deflecting element is formed substantially as a dome, with an apex of the dome facing in a direction away from the ultrasonic transducer. Advantageously, such an arrangement, seeks to facilitate smooth fluid flow of fluid around the ultrasonic transducer. Preferably, the fluid stabilizer is configured to encourage or produce a laminar flow.

Preferably, the dome is an elongated dome with a surface of revolution formed of a curve rotated about the longitudinal axis of the fluid conduit. Such a shape is advantageously hydrodynamically efficient.

Preferably, the base of the dome is equal to or larger than the diameter of the ultrasonic transducer and/or its housing.

Optionally, said curve has a radius of between 75% to 95%, more preferably, 85% the diameter of a maximum external diameter of an ultrasonic transducer housing. In this way, the fluid passes the radial extent of the ultrasonic transducer and its housing.

Optionally, said curve has a radius of between 20% and 30%, more preferably 25% of an inner diameter of the fluid conduit at a point in which ultrasonic transducer is located.

Optionally, the flow stabilizer comprises one or more radially extending supporting webs, ribs or branches and said curve has a radius of between 350% to 450%, more preferably 375% of the thickness of said radially extending supporting ribs or branches.

Preferably, the diameter of a base of said dome is substantially equal to or greater than the diameter of a housing of the ultrasonic transducer.

Preferably, each fluid flow stabilizer is arranged adjacent each support mounting, each fluid flow stabilizer comprising or defining one or more fluid apertures extending through the fluid flow stabilizer in a direction parallel to the longitudinal axis of the fluid conduit and in alignment with the fluid apertures defined or formed in the support mounting.

Such features as described above may advantageously seek to stabilize the fluid flow while avoiding undue pressure loss.

The fluid apertures may be formed generally as sectors of a circle.

Preferably, the flow stabilizer is coupled or connected to the support mounting. Preferably, the flow stabilizer and the support mounting are integrally formed.

One or more fluid drain passages are provided in the support mounting or flow stabilizer. Such passages seek to avoid the accumulation of air bubbles in the region of the transducers which could affect measurement accuracy.

The dome of the fluid stabilizer may be hollow to receive at least a part of a transducer body mounting or housing. The dome of the fluid stabilizer may be formed atop a hollow cylinder.

The dome of the fluid stabilizer is preferably located at the centre of the flow stabilizer, with its apex extending along the longitudinal axis of the fluid conduit. The dome is preferable concentric with the inner periphery of the fluid conduit.

In the flow stabilizer, a fluid drain passage is provided at the apex of the dome. A plurality of fluid drain passages are provided extending substantially radially around the base of the dome or hollow cylinder.

In the fluid flow stabilizer, ribs, webs or branches may define fluid apertures when installed in a fluid conduit. For example the distal ends of the ribs, webs or branches may be free and connect with the inner periphery of the fluid conduit. The distal ends may also be integrally formed with a circumferential ring. The ribs or branches may extend radially from around the dome or cylinder. A first axial edge of each branch, web or rib or fin may be aligned with a plane transverse to the longitudinal axis of the fluid conduit. A second opposing axial edge of each web, rib, branch or fin may be extend from the dome at an angle to a plane transverse to the longitudinal axis of the fluid conduit. Such features seek to stabilize fluid flow whilst avoiding undue pressure head loss.

Preferably, the fluid flow stabilizer and/or the fluid apertures therethrough or formed thereby are substantially rotationally symmetric.

Preferably, a bell-shaped flow surface is provided behind the ultrasonic transducer. This seeks to avoid pressure loss by providing a smooth flow passage.

Preferably, apertures in the flow stabilizer are bounded by dividing webs or ribs. Preferably, the dividing webs or ribs include a fluid facing or contacting edge angled with respect to a plane transverse to the longitudinal axis of the flow conduit.

Preferably, sealing grommets are provided between an outlet of the internal bore and the fluid channel.

Preferably, the fluid meter includes a controller for controlling the ultrasonic transducers.

Preferably, the fluid conduit is formed with a generally circular periphery or cross-section. Alternative cross-sections are envisaged such as polygonal.

Preferably, the fluid facing or contacting surfaces, ribs or webs of the support mounting and/or flow stabilizer are formed with rounded contours.

Preferably, the fluid flow meter is configured to be connected in line with a fluid carrying pipe. The fluid flow meter may comprise a fluid conduit extending in a single direction through the flow meter. The fluid flow meter may be provided with one or more flanges for coupling with flanges of the fluid carrying pipe.

The support mounting may be configured, in use, to space a transducer from an inner periphery of a fluid conduit of an ultrasonic flow meter, wherein the support mounting includes a housing for housing an ultrasonic transducer and mounting plurality of radially extending webs provided around said housing.

The support mounting may alternatively be provided with a plurality of through apertures around the housing. The housing may comprise a recess or bore formed in the centre of the support mounting.

Preferably, the support mounting comprises an internal through bore, extending from the housing to an external peripheral surface of the support mounting. Preferably, the internal bore extends in a radial direction. This can be used to house an electrical wire such as a coaxial cable.

Preferably, the housing is formed in the centre of the transducer support mounting. The housing may preferably be formed as an aperture in which a transducer may be received. Sealing means may be provided to seal the transducer in the housing. The sealing means may include a sealing cap and/or sealing rings, such as rubber O-rings. The housing may comprise a transducer body mounting for housing at least a part of the transducer.

The transducer support mounting may be formed of a metal and/or an electrically conductive material, such as brass or stainless steel. Metal components in the fluid flow meter which are in contact with fluid flowing in the fluid conduit may be coated with a plastic coating or other suitable coating to resist surface deposition of contaminants in the fluid flow. Such a coating may include PTFE.

According to an aspect of the invention, there is provided a flow stabiliser for an ultrasonic flow meter as defined in claim 13.

The flow stabiliser may include any one or more of the features of the flow stabilizer described in relation to the first aspect of the invention.

The application also discloses an ultrasonic fluid flow meter, the meter comprising a fluid conduit and a first and a second ultrasonic transducer in facing alignment for measuring a fluid flow in the fluid conduit, wherein the fluid conduit comprises a flow channel with a smooth axially extending internal wall profile defining a section of reduced internal cross-sectional area between said first and second ultrasonic transducers.

In this sense, smooth is considered to define an internal wall profile substantially free of protrusions or sudden changes of profile. The profile thereby has smooth transitions as it extends axially to define the flow channel.

The smooth wall profile, which preferably extends along the whole of the flow channel, seeks to ensure that the pressure head loss along the fluid flow channel is minimised and conditions the fluid flow in the channel. The section of reduced internal cross-sectional area increases the fluid flow rate between the first and second transducers. With an increased flow rate, the metrological accuracy of the ultrasonic transducers is optimised. Such a flow channel can also serve to clean acoustic propagation between the first and second transducers and also avoid surface deposition of substances, e.g. dirt, particles or other contaminants in the fluid.

Preferably, the first and second ultrasonic transducers are arranged in line of sight through the flow channel.

The flow channel may be formed of a plastics or metal material. The flow channel may be formed integrally with the fluid conduit.

Preferably, the flow channel is substantially rotationally symmetric about a central longitudinal axis thereof. As such, the meter may be implemented in various orientations without adversely affecting the measuring accuracy of the meter.

Preferably, the flow channel is formed of a plastics material. Alternatively, the flow channel may be formed of a metal material. Preferably, the material is resistant to thermal strain or expansion over normal operating conditions.

The flow channel may be formed integrally with the fluid conduit.

Preferably, the flow channel is substantially symmetric about a mid-plane extending transverse to the central longitudinal axis of the flow channel. As such, the fluid flow meter can be used in a forwards or backwards flow configuration.

Preferably, the internal cross-sectional area of the flow channel continuously decreases from an inlet or outlet of the flow channel towards the section of reduced internal cross-sectional area. As such, step-changes in the wall profile are avoided.

Preferably, the section of reduced internal cross-sectional area extends between 30% and 70% of the flow channel. The section of reduced internal cross-section is preferably concentric within the flow channel and preferably at the mid-section thereof.

Preferably, between an inlet or outlet of the flow channel and the section of reduced internal cross-sectional area in a direction towards the section of reduced internal cross-sectional area, the internal wall profile of the flow channel includes a concave radius followed by a convex radius.

Preferably, the concave radius, i.e. having an axis of rotation within the flow channel, extends 5-15%, more preferably 10% of the length of the flow channel.

Preferably, the convex radius, i.e. having an axis of rotation external the flow channel. 10 to 25%, more preferably 20% the length of the flow channel.

The features of the flow channel advantageously provide an efficient hydrodynamic shape and seek to avoid undue pressure head loss to the fluid flowing in the fluid meter.

Preferably, the ultrasonic transducers are arranged or positioned at either end of the flow channel.

Preferably, the concave radius is between 10 and 20mm.

Preferably, the concave radius is 15mm.

Preferably, the convex radius is between 25 and 35 mm.

Preferably, the concave radius is 30mm.

Preferably, at its smallest section, the internal diameter of the section of reduced internal cross-sectional area is 50% to 60%, more preferably 55% of the internal diameter of the cross-sectional area at the inlet or outlet of the flow channel.

Preferably, the flow channel is configured such that the flow rate in the section of reduced diameter is 300% to 400%, more preferably 350% the flow rate at the inlet or outlet.

The application also discloses an ultrasonic fluid flow meter flow channel for a fluid flow meter, wherein the flow channel is formed with a smooth axially extending internal wall profile defining a section of reduced internal cross-sectional area between an inlet and an outlet of the flow channel.

Preferably, the flow channel is substantially rotationally symmetric about the longitudinal axis of the flow channel.

Preferably, between an inlet or outlet of the flow channel and the section of reduced internal cross-sectional area in a direction towards the section of reduced internal cross-sectional area, the internal wall profile of the flow channel includes a concave radius followed by a convex radius. The concave radius and the convex radius may be as per any one or more features of as described above..

The application also discloses a transducer body mounting for at least partially housing an ultrasonic transducer of an ultrasonic fluid flow meter, the body mounting comprising a core of a first material; and an electrically insulating material formed at least partially over said core, wherein the core and the electrically insulating material are formed integrally with one another.

The term integral includes a mechanical interconnection of the parts such that they cannot be separated without damage to one of the part. The core and the electrically insulating material may retain each of their separate material structures and properties. In this way, the transducer body mounting can provide both axial rigidity and electrical and acoustic insulation to an ultrasonic transducer. The arrangement provides a bi-material body mounting structure which can benefit from the material properties of the each component material. In addition, the dimensional accuracy of the part can be improved, for example, if the core is machined from a metal material. The transducer body mounting is preferably formed as a single component. The core may be made from a harder material than the electrically insulating material. The core may be made of a material resistant to thermal expansion for operating temperatures of the meter.

Preferably, the electrically insulating material is moulded over said core. Preferably, the electrically insulating material at least partially encapsulates the core. The core may be formed of an electrically conductive material.

Preferably, the core material is formed of a substantially rigid material forming exposed opposing, i.e. on opposite sides, axial bearing faces of the body mounting for contact with adjacent electrically conductive parts.

Preferably, the exposed axial faces are substantially parallel to one another.

Preferably, the electrically insulating material includes a recess for receiving a part of an ultrasonic transducer. Such a recess may, for example, serve to retain or receive an electrical contact. The recess may be formed with any suitable shape, for example circular, rectangular or C-shaped.

Preferably, the body mounting includes indexing means, for example surface protrusions to fit in corresponding recesses, for locating the transducer body at a predetermined orientation in a corresponding receiving aperture. This serves to prevent damage to connecting wires or cables passing though the body mounting.

Preferably, the body mounting includes a through aperture extending from an internal surface of the body mounting to an exterior peripheral surface of the body mounting. This through aperture can house an electrical wire.

Preferably, the electrically insulating material includes a support platform for a piezo ceramic element of an ultrasonic transducer.

Preferably, the electrically insulating material includes coupling means, for example, recesses for coupling the transducer body mounting with an annular metallic ring.

The core may be formed of a metallic material, for example a metallic material with material properties compatible or stable with the pressure, temperature and fluid in the fluid conduit. The metallic material may be a copper alloy, stainless steel or brass material.

The core may be formed of the same material as connecting parts, such as the support mounting and housing parts of the ultrasonic transducer. This ensures material compatibility and stable galvanic coupling.

The core may be formed of a material which is harder, i.e. more resistant to deformation under load, than the insulating material.

The first material may be substantially resistant to thermal expansion in the range 1 degree centigrade to 180 degrees centigrade.

The first material may be different, preferably in chemical composition or material properties to the electrically insulating material.

Preferably, the electrically insulating material is formed of a plastics material.

The application further discloses an ultrasonic transducer support mounting assembly comprising a transducer support mounting comprising a receiving part for receiving a transducer module, a transducer body mounting, a transducer module and a sealing cap arranged to cooperate with the transducer support mounting to apply an axial force to maintain the transducer module and transducer body mounting within said receiving part.

Parts of the assembly may be formed integrally with one another.

Preferably, bearing faces of adjacent components are formed of a metallic material.

Preferably, the ultrasonic transducer support mounting assembly further comprises sealing means to prevent the ingress of water into the interior of the transducer body mounting.

The application further discloses an ultrasonic fluid flow meter comprising a transducer body mounting or an ultrasonic transducer support mounting assembly.

The present invention will now be described by way of example with reference to the drawings in which:
Figure 1 shows a perspective view of an ultrasonic fluid flow meter;
Figure 2 shows a cross-section through the flow meter of Figure 1;
Figure 3 shows a detail cross-section view of a fluid flow conduit of the flow meter of Figure 1;
Figure 4a shows a perspective exterior view of the fluid flow conduit with a central fluid flow channel removed therefrom;
Figure 4b shows a cross-section of Figure 4a;
Figure 5 shows a perspective view of the fluid flow channel of Figure 4a with sealing rings;
Figure 6 shows a cross-section through the fluid flow channel of Figure 4a through a plane through the longitudinal axis of the fluid flow channel;
Figure 7 shows perspective cross-section view of a transducer support mounting in place in the fluid flow channel;
Figure 8a shows a perspective cross-section view of the transducer support mounting removed from the fluid flow channel;
Figure 8b shows a detail perspective view of a sealing grommet in position in the fluid flow channel;
Figure 9 shows a view of the transducer support mounting;
Figure 9a shows a view of the transducer support mounting connected with a fluid flow stabilizer;
Figure 9b shows a view of the transducer support mounting spaced from the fluid flow stabilizer;
Figure 9c shows a cross-section of the transducer support mounting and flow stabilizer shown in Figure 9a;
Figure 10 shows a cross-section perspective view of the flow stabilizer upstream thereof;
Figure 11a shows a cross-section along the plane A-A of Figure 11b of the fluid flow stabilizer;
Figure 11b shows a plan view of the fluid flow stabilizer of Figure 11a;
Figure 11c shows a cross-section along the plane B-B of Figure 11b of the fluid flow stabilizer;
Figure 12a shows an exploded view of the transducer support mounting and a transducer module;
Figure 12b shows a detail view of a transducer body mounting with a central contact and a ground contact;
Figures 13a and 13b show top and rear perspective views of a core of the transducer body mounting;
Figure 14 shows a perspective view of the transducer module located in the transducer support mounting;
Figures 15a and 15b show a top view and a side detail view of locating means on the transducer body mounting;
Figure 15c shows a view of the transducer body mounting and locating means located in the transducer body mounting;
Figure 16a shows a rear view of the transducer body mounting;
Figure 16b shows a rear perspective view of the transducer mounting;
Figure 17 shows a perspective view of the transducer body mounting;
Figure 18a shows a cross-sectional view of the transducer body mounting with a piezo-ceramic element in position;
Figure 18b shows a perspective cross-sectional view of the transducer body mounting with a piezo-ceramic element in position; and
Figure 20 shows a chart of metrological error against volume flow rate.

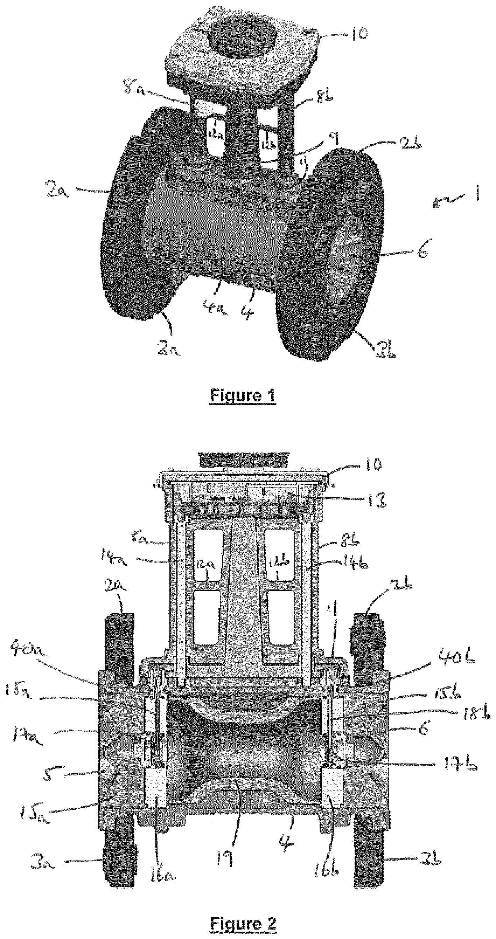

An ultrasonic fluid flow meter is shown in Figure 1 generally at item 1. The fluid flow meter 1 is configured to be arranged in-line with a fluid conduit in which fluid flow is to be measured. For this purpose, the fluid flow meter includes a radially extending flange 2a, 2b at each end of the meter 1. The flanges 2a, 2b include a plurality of fixing apertures 3a, 3b to connect the meter to corresponding adjacent fixing apertures on a fluid conduit or pipe (not shown). When installed, the fluid flow meter 1 is aligned with the fluid conduit in which fluid is to be measured.

The fluid flow meter 1 includes a tubular conduit or central section 4 which extends between the two flanges 2a, 2b. In the embodiment, the tubular conduit 4 includes an arrow 4a provided on its external surface to indicate the normal operational direction of fluid flow within the fluid flow meter to assist in installation of the fluid flow meter. However, the design of the fluid flow meter permits operation in alternative orientations.

The flanges 2a, 2b extend from the surface of the tubular conduit 4. The tubular conduit 4 includes an inlet, upstream orifice 5 and an outlet, downstream orifice 6.

Control electronics 13 (as shown in Figure 2) are provided in a housing 10 which is supported on a tapered tubular support column 9 which is joined to a moulded base structure 11 formed atop the surface of the tubular conduit 4 and which extends parallel to the longitudinal axis of the flow meter 1. The support column is hollow and provides a conduit for wires from sensors contained within the tubular conduit of the flow meter 1.

Spaced either side of the support column 9 and parallel therewith are fixing columns 8a, 8b which contain threaded bolts 14a, 14b to connect the housing 10 and the support column 9 to the housing formed of the tubular conduit 4 of the fluid flow meter 1. A transverse web 12a, 12b is provided between the support column 9 and each of the fixing columns 8a, 8b.

Figure 2 shows a cross section through the fluid flow meter 1 of Figure 1. As shown in Figure 2, in the inlet orifice 5 of the flow meter 1, a flow stabilizer 15a is provided. Adjacent the inlet fluid flow stabilizer 15a, and downstream thereof, a transducer support mounting 16a is provided which houses a transducer module 17a. The transducer module is electronically connected via a coaxial cable or wire 18a through a sealing grommet 40a to the support column 9 in order to electrically connect the transducer module to the control electronics 13 provided in the housing 10.

At the downstream end of the tubular conduit 4, a corresponding transducer support mounting 16b is provided which houses a downstream transducer module 17b, which is arranged facing the upstream transducer support module 17a.

Adjacent the downstream transducer support module 16b and downstream thereof, a further fluid flow stabilizer 15b is provided at the outlet 6 of the tubular conduit 4.

The fluid flow stabilizer 15a, transducer support mounting 16a and transducer module 17a of the inlet/upstream side of the fluid flow meter is configured similarly and mirrors the fluid flow stabilizer 15b, transducer support mounting 16b and transducer module 17b of the outlet/downstream side, i.e. they are generally symmetric about a plane which is transverse to the longitudinal axis of the meter. In this application, the description of an upstream fluid flow stabilizer, transducer support mounting and transducer module may therefore equally apply to the corresponding downstream fluid flow stabilizer, transducer support mounting and transducer support mounting and any associated components.

Between the inlet transducer support mounting 16a and the outlet transducer support mounting 16b, a fluid flow channel 19 is provided which has a reduced internal diameter at its midpoint along its longitudinal axis.

The fluid flow channel therefore provides a restriction in the fluid conduit.

A fluid conduit is formed within the tubular conduit bound by an inner periphery, which in the embodiment, is formed in part by an inner periphery of the tubular conduit 4 and in part by the inner periphery of the fluid flow channel 19. The inner periphery defines the inner boundary or wall profile of the fluid conduit.

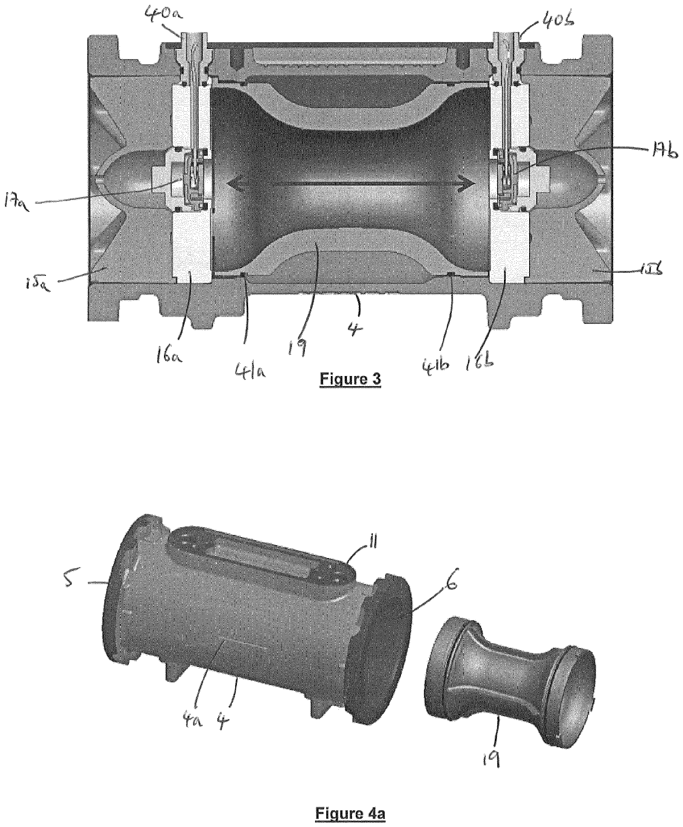

Reference is made to Figure 3 in the description of the general operation of the fluid flow meter. The upstream and downstream transducer modules 17a, 17b include piezoelectric transducers which transmit and receive ultrasonic/ultrasound signals. According to known principles, the time taken for signals to travel between the transducers can be used to determine the fluid flow rate.

Advantageously, as shown in Figure 3, the upstream and downstream transducer modules are in facing alignment, i.e. they directly face one another at either end of the fluid flow channel, and are located within the bulk fluid flow.

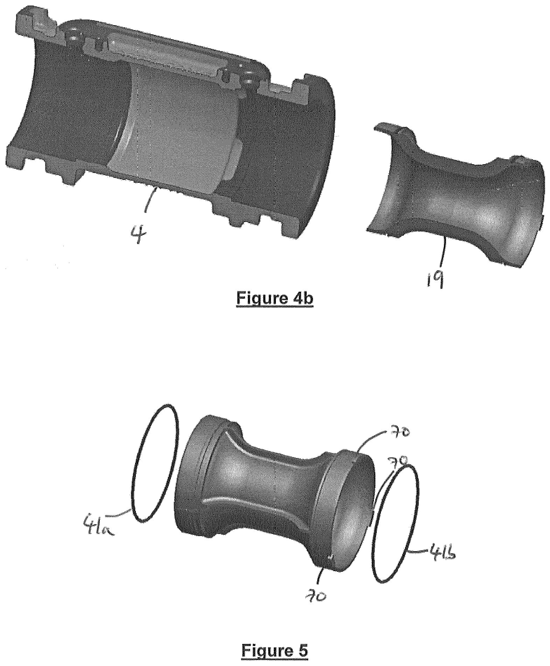

Figure 4a shows the fluid flow channel 19 removed from the tubular conduit 4. The fluid flow channel 19 is formed as a tube with a reduced diameter. Figure 4b shows a cross-section of the fluid flow channel 19 removed from the tubular conduit 4. The fluid flow channel 19, when installed, is positioned in a central section of the tubular conduit 4. The fluid flow channel 19 is stopped in rotational and axial translation by three protrusions or pins 70 located at intervals of 120 degrees around the external circumference of the flow channel.

As shown in Figure 5, the fluid flow channel 19 is provided with O-ring seals or gaskets 41a, 41b in recesses in the outer surface of the fluid flow channel 4. These O-ring seals 41a, 41b provide a water-tight seal between the outer surface of the fluid flow channel 19 and the inner surface of the central portion of the tubular conduit 4.

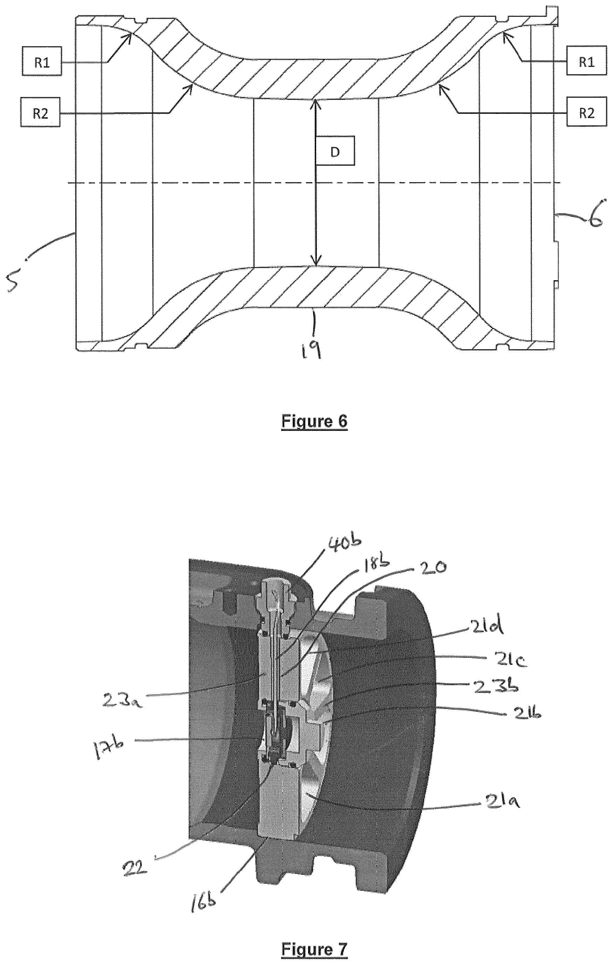

Figure 6 shows a cross-section through the fluid flow channel. The fluid flow channel is substantially rotationally symmetric about the central longitudinal axis of the channel and substantially symmetric about a plane transverse to the central longitudinal axis of the fluid flow channel passing through the mid-point thereof.

At the inlet 5 the inner diameter or inner wall profile of the fluid flow channel 19 decreases with a concave radius R1 progressing to a convex radius R2 to a mid-point diameter D. The inner diameter D at the midpoint of the fluid flow channel is around 50% of the inner diameter at the inlet 5 such that in use there is a 3 to 3.5 fold increase in flow rate in the central section of the fluid flow channel compared with the inlet to the fluid flow channel.

The concave radius R1 and convex radius R2 on the inner profile of the fluid flow channel serve to reduce pressure head loss across the fluid flow channel 19. The radius R1, in the embodiment, is 15mm and the radius R2 is 30mm. In the embodiment, the mid-point diameter D is 36 mm. It has be unexpectedly found that substantially identical radiuses may be applied to fluid flow channels of different inlet diameters for example 80, 100, 125 and 125 mm to substantially optimise or reduce pressure head loss.

The smooth, i.e. generally free of protrusions or sudden profile changes, inner wall profile seeks to condition the flow of fluid and reduce the build-up of contaminants carried in the fluid.

Figure 7 shows a further cross-sectional, perspective view of the outlet transducer support mounting 16b. The downstream fluid flow stabilizer has been removed for clarity.

The support mounting 16b is formed substantially as a disc with the transducer module 17b provided in a substantially circular aperture 22 formed at the centre of the support mounting 16b. The transducer support module 16b is formed with a plurality of radially arranged sector-like apertures 21a, 21b, 21c, 21d which are equiangularly spaced around the circular aperture 22 of the support mounting 16b.

The sector-like apertures 21a-21d have internal walls which extend substantially parallel to the longitudinal axis of the fluid flow meter 1. The sector like apertures are separated from one another by radially extending dividing ribs or webs 23a, 23b. In the embodiment, the transducer support mounting is provided with eight equally sized apertures.

The support mounting 16b includes a wire conduit 20 which is provided within one of the dividing ribs 23a, which extends vertically, in a radially extending direction, in the support mounting. The coaxial cable or wire 18b from the transducer module 17b passes within the wire conduit 20 and then through an aperture in a grommet 40b provided in the wall of the fluid conduit 4.

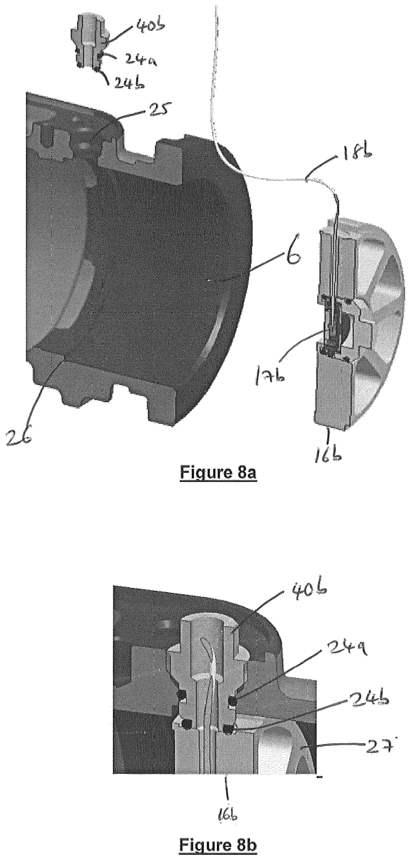

Figure 8a shows a further view of the fluid flow meter before the transducer support mounting 16b is installed in the outlet 6 of the fluid flow meter 1. The outlet aperture 6 is provided with a stepped internal surface edge 26 against which the circumferential edge of the transducer support mounting 16b rests. The cable or wire 18b which connects the transducer support mounting 17b is passed through the aperture in the grommet 40b. The grommet 40b is formed to fit within a stepped aperture 25 formed in the wall of the tubular conduit 4. Rubber sealing rings 24a and 24b are provided in recesses on the outer surface of the gland or grommet 40b to form a water-tight seal between the grommet 40b and the wall of the tubular conduit 4.

Figure 8b shows a detailed view of the sealing arrangement of the gland or grommet 40b. The first sealing ring or gasket 24a provides a water-tight seal between the grommet 40b and the body of the fluid conduit 4. The second sealing ring or gasket 24b provides a watertight seal between the grommet 40b and the transducer support mounting 16b. The gland or grommet 40b may be provided with a screw thread which is received in a corresponding thread in the wall of the tubular conduit.

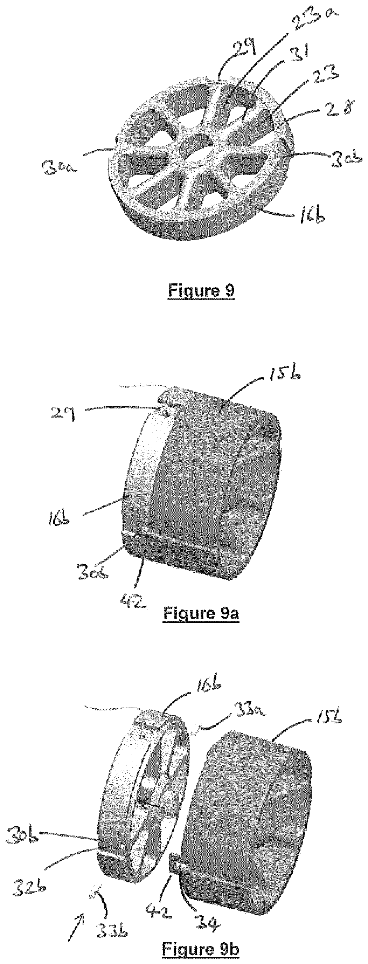

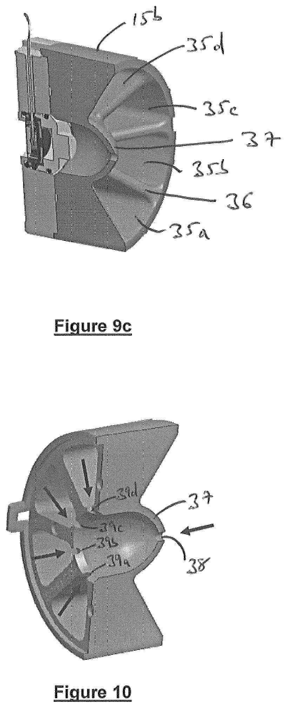

Figure 9 shows further detail of the transducer support mounting 16b. On the, in use upstream side 28 of the transducer support mounting 16b, the fluid facing edges 31 of the dividing ribs 23 are provided with radiused or smooth contours to improve fluid flow characteristics.

The transducer support mounting 16b includes a substantially flat recess 29 at its upper side where the wire 18b extends through the dividing rib 23a. The recess 29 is provided with a planar surface against which the second seal 24b of the grommet 40b may seal.

The transducer support mounting is provided with two opposing, i.e. formed on opposite dies thereof, axially extending recesses 30a, 30b on its circumference. As shown in Figures 9a, 9b, these opposing recesses 30a, 30b are configured to receive protrusions 42 which extend from the outer surface of the flow stabilizer 15b in order to mount the stabilizer to the transducer support mounting 16b.

The opposing recesses 30a, 30b on the transducer support each include a circular aperture 32b for receiving a plastic pin 33b which is inserted through an aperture 34 in the protrusion 42 on the flow stabilizer 15b in order to fasten the flow stabilizer 15b to the transducer support mounting16b.

Figure 9c shows cross-sectional detail of the fluid flow stabilizer 15b. The fluid flow stabilizer 15b is formed with a cylindrical outer surface. The fluid flow stabilizer 15b is provided with a plurality of radially extending apertures 35a, 35b, 35c, 35d which are configured for alignment with and are of substantially the same size and shape as the corresponding apertures 21a, 21b, 21c, 21d on the stabilizer support mounting 16b. In the embodiment, the flow stabilizer comprises eight equally sized radially extending sector-like apertures.

As shown in Figure 10, the radially extending dividing ribs 36 between adjacent apertures 35a-35d of the fluid flow stabilizer extend from an extended dome formed atop a hollow cylinder or bell shaped centre 37 toward the inner wall of the outer cylindrical surface. The downstream or fluid facing edges of the dividing ribs 36 are provided with a smooth contour to improve fluid flow. The upstream edges of the dividing ribs 36 of the apertures 35a-35d of the fluid flow stabilizer are generally planar to rest adjacent the planar downstream edges of the dividing ribs 23 of the transducer support 16b.

In the embodiment, the dome is formed from a curve of radius of 18.7mm, i.e. around 85% of the diameter of the base of the bell or hollow cylinder, rotated to form a surface of rotation. The central bell shaped part 37 of the fluid flow stabilizer 15b is hollow and includes a fluid orifice 38 at the top or peak of the bell or dome and fluid orifices 39a, 39b, 39c, 39d spaced around the base of the bell or hollow cylinder between adjacent dividing ribs 36. These fluid orifices serve as drainage holes to facilitate a quick evacuation of air which may be present in the fluid. This prevents the accumulation of air bubbles which could disturb or affect the accuracy of fluid flow measurement.

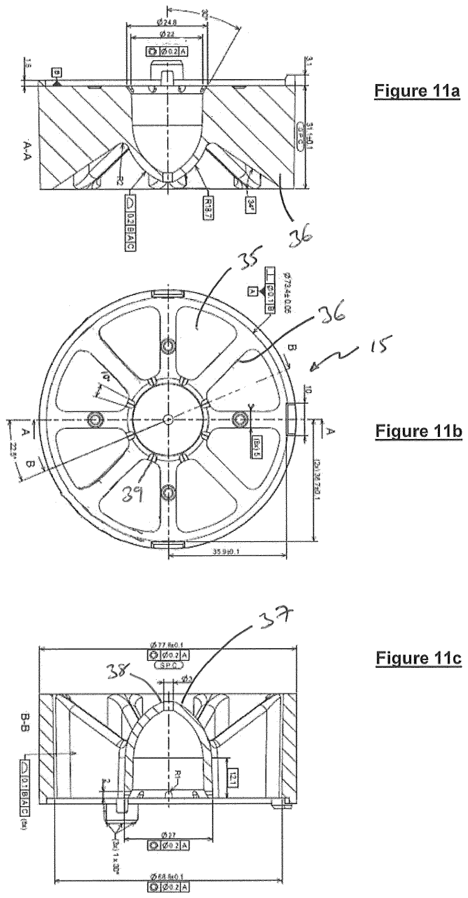

Figure 11a shows a cross-section through plane A-A of Figure 11b, which shows a plan view of the flow stabilizer 15. Figure 11c shows a cross-section through plane B-B of Figure 11b. Although dimensions are shown in the Figures, these are provided purely as example and the invention is not limited to such dimensions. The dimensions shown may however show advantageous, yet optional, dimensional relationships.

The downstream edges of the radially extending ribs or webs are aligned at an angle, in the embodiment an angle of 34 degrees to a plane transverse to the central rotational axis of the flow stabilizer 15.

The fluid orifices 39 around the base of the bell shaped part 37 have a taper, in the embodiment of 10 degrees.

With the arrangement described, the piezoelectric transducers are advantageously located in the centre of fluid flow. As such, the meter benefits from axial symmetry.

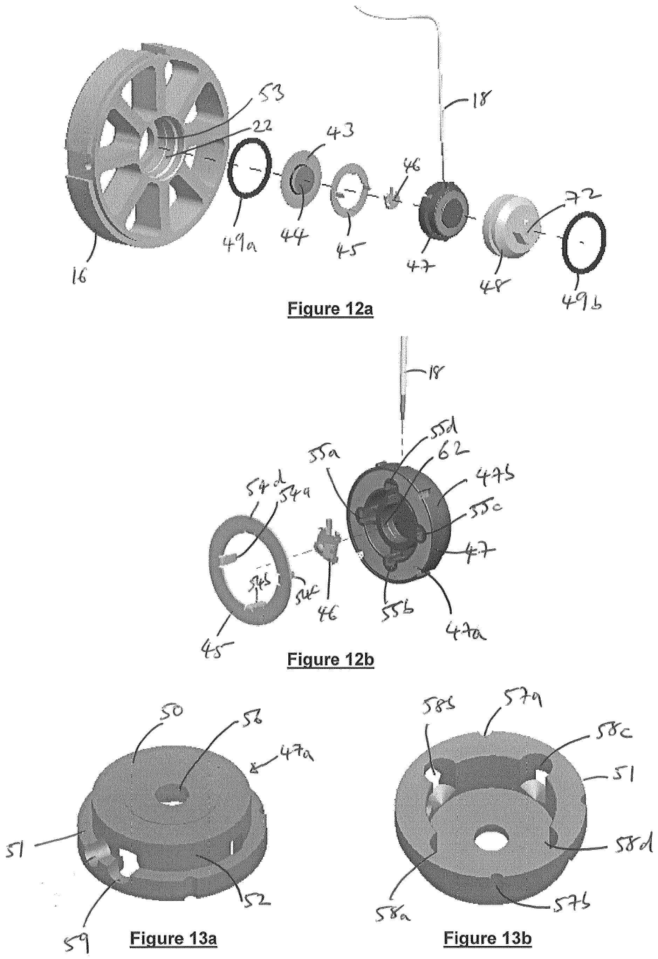

An exploded view of the transducer module is shown in Figure 12a. Within the central aperture 22 of the transducer support mounting 16, a rubber O-ring 49a is provided which is arranged against a stepped face 53 which extends inwardly from the inner surface of the aperture 22. A piezo ceramic element 44 is provided on a face of a stainless steel member or disc 43 which is gold plated to provide a good electrical connection. The piezo-ceramic element 44 is smaller in diameter than the stainless steel member 43 on which it is provided. An annular ground or ring contact 45 is provided which is arranged around the piezo-ceramic element 44 and contacts with the stainless steel member 43.

A central transducer contact 46 is provided which is connected with the rear or opposing surface of the piezo-ceramic element 44. To the piezo-ceramic element is connected the coaxial cable or wire 18 such that a voltage may be applied across it. The ground contact 45 is configured with three axially extending prongs which locate in recesses in a transducer body mounting 47. The transducer body mounting 47 is formed with a horse-shoe or C-shaped receptacle 62 in which the central contact 46 is located.

The central aperture 22 in the transducer support mounting 16 includes an internal thread. A sealing cap 48 with a corresponding external thread may be screwed into the internal thread and thus contain the components of the transducer within the aperture 22 of the transducer support mounting 16. The sealing cap may be provided with a tool connection, e.g. a hexagonal head for connection of an appropriate tool to facilitate the screwing or coupling of the sealing cap.

A further o-ring seal 49b is provided between the outer surface of the sealing cap in a recess thereof and the inner face of the central aperture of the transducer support mounting 16.

Figure 12b shows a reverse side view of the transducer body mounting 47, ground contact 45 and central transducer contact 46. Four equally spaced prongs 54a - 54d extend axially from the annular ground contact 45. When assembled, these prongs 54a-54d are located in corresponding recesses 55a-55d in the transducer body mounting.

The transducer body mounting 47 is formed of metal, in the embodiment, a brass core material 47a which is overmoulded with a plastics material 47b. This bi-material construction provides axial rigidity and strength thought the use of the metallic material and also electrical and acoustic insulation by virtue of the plastics material.

Figure 13 shows a view of the core 47a of the transducer body mounting 47. The core 47a is formed with a planar circular end face 50 with a central circular aperture 56. The core has an axially extending edge 52 which extends from the edge of the end face 50. A radially extending flange section 51 is provided at the base of the core 47a at the opposite end to the end face 50.

As more clearly visible in Figure 13b, two opposing semi-circular indents 57a, 57b are provided on the outer circumference of the flange 51. Around the inner circumference of the core 47a, four semi-circular equispaced axially extending cut-outs 58a, 58b, 58c, 58d are formed. These cut-outs are arranged such that a through aperture is formed from the inner surface to the outer surface of the inner core at each cut-out.

In line with each of two of the opposing cut-outs 58b, 58d, a semi-circular cut-out 59 is formed in the flange 51.

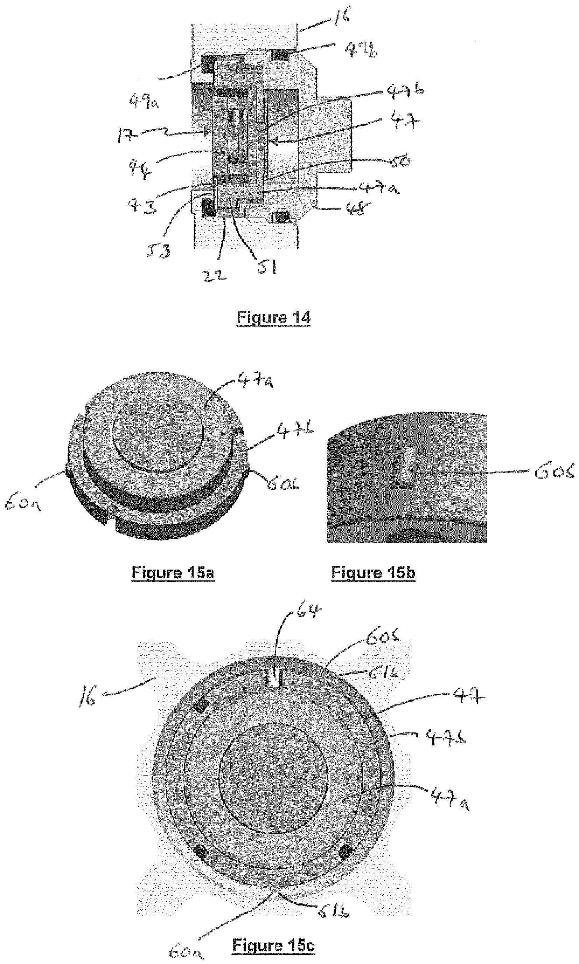

Figure 14 shows the transducer body mounting 47 fitted within the aperture 22 in the transducer support mounting 16. The transducer support mounting 16 is also made of a metallic or otherwise electrically conductive material. As can be seen in Figure 14, the stainless steel disc 43 rests against the stepped face 53 of the aperture 22 in the transducer support mounting 16.

The metallic core 47a of the bi-metallic transducer body mounting rests at the base of the flange 51 against the stainless steel disc 43 and at the end face 50 against the sealing cap 48, which is also made of a metallic material. In this way, a continuous metal contact is provided between the axial bearing faces of the components. The use of metallic materials permits high axial strength to ensure good sealing and resistance to torque loss once the transducer module 17 has been installed in the transducer support 16, such that the sealing cap 48 remains securely in position. The arrangement is also advantageous resistant to thermal cycling.

Figures 15a shows the metallic transducer body mounting core 47a, overmoulded with a plastic material 47b. The cut-outs 58a to 58c in the core and central aperture 56 facilitate the flow of plastic during the overmoulding process and provide a robust interconnection with the metallic core 47a.

The plastic overmoulding 47b generally follows the form of the metallic core 47a. Within the inner circular recess of the transducer body mounting the plastic C-shaped receptacle is formed upon which the piezo-ceramic transducer is supported.

As shown in Figure 15a, 15b, a cable hole is provided to receiving the electrical wire 18, in the embodiment in the form of a coaxial cable.

As shown in Figures 15a, 15b, 15c, two generally semi-circular protrusions 60a, 60b are provided around the flange section of the plastic overmoulding 44b. These protrusions are configured to locate in correspondingly semi-circular formed recesses 61a, 61b in the inner circumferential surface of the transducer support mounting 16 as shown in Figure 15c. These protrusions 60a, 60b serve to prevent rotation of the transducer body mounting 47 during tightening with the threaded sealing cap 48 and prevent damage to the coaxial cable 18.

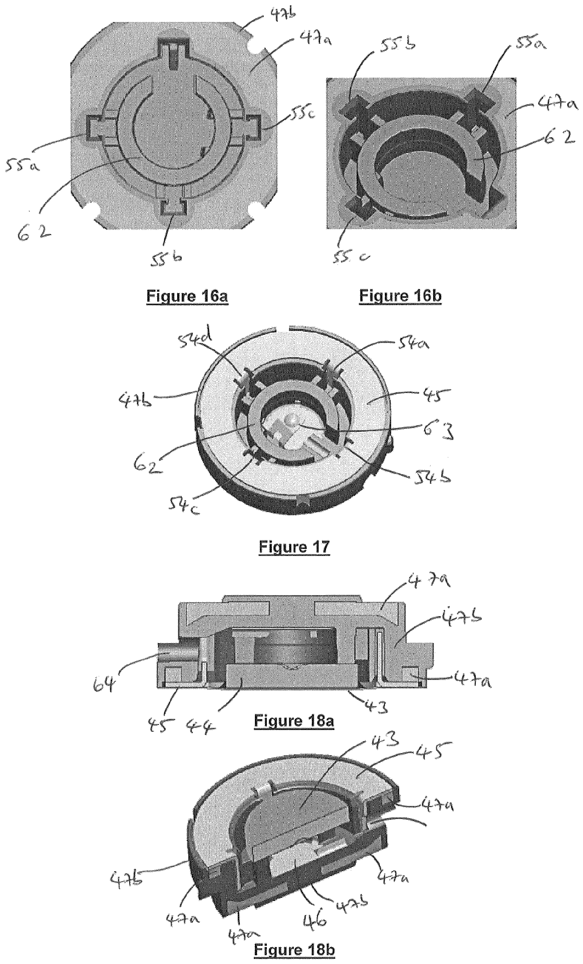

Figure 16a shows a rear view of the bottom of the transducer body mounting 47. The plastic overmoulding 47b is formed with three generally open rectangular recesses 55a to 55c around the inner circumference of the transducer body mounting 47. These recesses 55a to 55c are formed in the semi-circular cut-outs 58a to 58d of the core 47a. These recesses 55a to 55c are configured to receive the axially extending prongs of the annular ground contact 45. The C-shaped support/receptacle 62 is moulded in the base of the transducer body mounting. Figure 16b shows a rear perspective view of the transducer body mounting 47. The vertical extent of the C-shaped receptacle can be seen more clearly.

As shown in Figure 17, the inner base surface of the transducer body mounting 47 is provided with a spring contact 63 to bias the central contact 46 against the rear or opposing face of the piezo-ceramic element. The core of the coaxial cable 18 is welded to the central contact 46 and the braid of the coaxial cable to the ring contact 43.

As shown in Figures 18a and 18b, it can be seen that the central contact 46 of the piezo-electric element is electrically insulated from the metallic components by the overmoulding 47b of the transducer body mounting. A radially extending aperture 64 is provided in the transducer body mounting 47 through which the coaxial cable may pass.

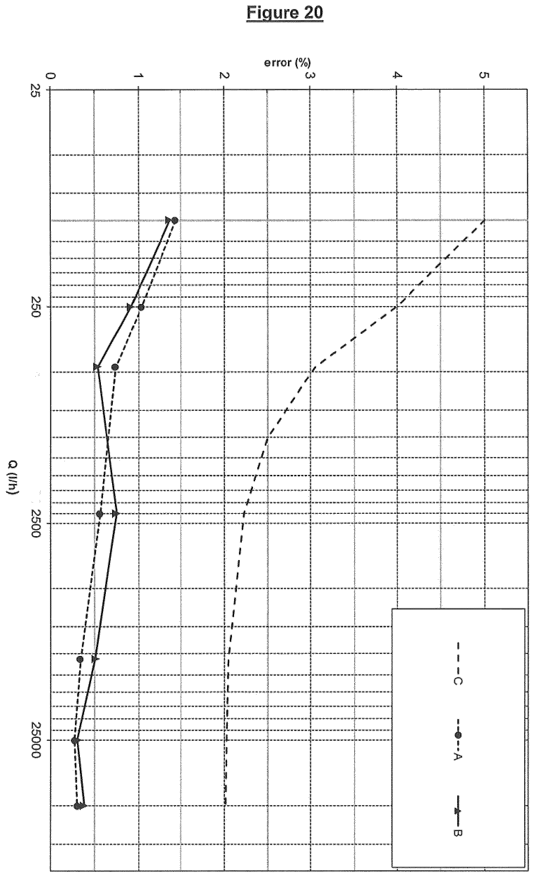

Figure 20 shows a plot of metrology error against fluid flow rate in the meter on a logarithmic scale. The line labelled "A" shows an average of metrological error at 50 degrees centigrade at differing orientations of the meter. The line labelled "B" shows an average metrological error at 50 degrees centigrade when flow stabilizers are positioned upstream of the flow meter. Line C shows the European Committee for Standardisation requirements for such a meter. It can be seen that metrological error falls within the requirements of the standard.

The present invention may be carried out in various ways and various modifications are envisaged to the embodiments described without extending outside the scope of the invention as defined in the accompanying claims.

## Claims

1. An ultrasonic fluid flow meter (1), the meter comprising:
a fluid conduit (4) with an inlet and an outlet (5, 6), the fluid conduit bound by an inner periphery; and
a first and a second ultrasonic transducer (17a, 17b) for measuring a fluid flow in the fluid conduit (4); wherein the first and second ultrasonic transducers (17a, 17b) are arranged in facing alignment; and wherein the first and second ultrasonic transducers (17a, 17b) are arranged within the fluid conduit (4) spaced from said inner periphery, and wherein each of the first and second ultrasonic transducers (17a, 17b) are supported by an associated support mounting (16a, 16b), and wherein a plurality of fluid apertures (21a, 21b, 21c, 21d) are provided around each ultrasonic transducer (17a, 17b)
wherein each ultrasonic transducer (17a, 17b) is provided with a flow stabiliser (15a, 15b), each flow stabilizer including a fluid deflecting element for deflecting, in use, fluid flowing in the fluid conduit around the respective ultrasonic transducer when the flow stabilizer (15a, 15b) is located in the fluid conduit (4) upstream of the ultrasonic transducer (17a, 17b), wherein the deflecting element is formed substantially as a dome (37), with an apex of the dome facing in a direction away from the ultrasonic transducer; and
wherein in the flow stabilizer, a fluid drain passage (38) is provided at the apex of the dome (37) and a plurality of fluid drain passages (38, 39a, 39b, 39c, 39d) are provided extending substantially radially around the base of the dome (37).

2. An ultrasonic fluid flow meter (1) as claimed in claim 1, wherein the fluid conduit (4) is substantially rotationally symmetric.

3. An ultrasonic fluid flow meter (1) as claimed in any preceding claim, wherein the first and second ultrasonic transducers (17a, 17b) are arranged substantially concentrically within the inner periphery of the fluid conduit (4).

4. An ultrasonic fluid flow meter (1) as claimed in any preceding claim, wherein each support mounting (16a, 16b) includes a plurality of radially extending webs (23) arranged around said associated ultrasonic transducer (17a, 17b).

5. An ultrasonic fluid flow meter (1) as claimed in any preceding claim, wherein the support mounting (16a, 16b) defines one or more fluid apertures (21a, 21b, 21c, 21d) extending through the support mounting in a direction substantially parallel to the longitudinal axis of the fluid conduit (4).

6. An ultrasonic flow meter as claimed in claim 5, wherein the fluid apertures (21a, 21b, 21c, 21d) are arranged rotationally symmetric about the central longitudinal axis of the fluid conduit (4).

7. An ultrasonic flow meter (1) as claimed in any preceding claim, wherein within the flow conduit (4), the fluid flow meter is substantially symmetric about a plane midway between the first and second ultrasonic transducers (17a, 17b), the plane extending transverse to the central longitudinal axis of the fluid conduit (4).

8. An ultrasonic flow meter (1) as claimed in any one of the preceding claims, wherein the dome (37) is an elongated dome with a surface of revolution formed of a curve rotated about the longitudinal axis of the fluid conduit (4).

9. An ultrasonic flow meter (1) as claimed in claim 8, wherein the flow stabilizer (15a, 15b) comprises more than one radially extending supporting ribs or branches (36) and said curve has a radius of between 350% to 450% of the thickness of said radially extending supporting ribs or branches (36).

10. An ultrasonic flow meter (1) as claimed in any one of the preceding claims, wherein the diameter of a base of said dome (37) is substantially equal to or greater than the diameter of a circular aperture in which said ultrasonic transducer (17a, 17b) is provided.

11. An ultrasonic flow meter (1) as claimed in any preceding claim wherein each flow stabilizer (15a, 15b) is arranged adjacent each support mounting (16a, 16b), each fluid flow stabilizer (15a, 15b) comprising or defines one or more fluid apertures extending through the fluid flow stabilizer in a direction parallel to the longitudinal axis of the fluid conduit (4) and in alignment with the fluid apertures in the support mounting (16a, 16b).

12. The ultrasonic flow meter (1) of claim 1, wherein the support mountings (16a, 16b) associated with the respective ultrasonic transducers are configured to space the respective ultrasonic transducers (17a, 17b) from the inner periphery of the fluid conduit (4) of the ultrasonic flow meter, wherein each of the support mountings (16a, 16b) includes a housing (22) for housing the respective ultrasonic transducer (17a, 17b) and a plurality of radially extending webs (21a, 21b, 21c, 21d) provided around said housing.

13. A flow stabiliser (15a, 15b) for an ultrasonic flow meter (1) as claimed in any one of claims 1 to 11, wherein the stabilizer (15a, 15b) includes a fluid deflecting element for deflecting fluid, wherein the deflecting element is formed substantially as a dome (37), the stabiliser further including a fluid drain passage provided at the apex of the dome (37) and a plurality of fluid drain passages (38, 39a, 39b, 39c, 39d) extending substantially radially around the base of the dome (37).

## Patentansprüche

1. Ultraschallfluiddurchflussmesser (1), wobei der Durchflussmesser umfasst:
eine Fluidleitung (4) mit einem Einlass und einem Auslass (5, 6), wobei die Fluidleitung durch einen Innenumfang begrenzt ist; und
einen ersten und einen zweiten Ultraschallwandler (17a, 17b) zum Messen eines Fluidflusses in der Fluidleitung (4); wobei der erste und der zweite Ultraschallwandler (17a, 17b) einander zugewandt angeordnet sind; und wobei der erste und der zweite Ultraschallwandler (17a, 17b) innerhalb der Fluidleitung (4) vom Innenumfang beabstandet angeordnet sind, und wobei jeder des ersten und des zweiten Ultraschallwandlers (17a, 17b) durch eine zugehörige Halterung (16a, 16b) gehalten wird, und wobei eine Vielzahl von Fluidöffnungen (21a, 21b, 21c, 21d) um jeden Ultraschallwandler (17a, 17b) herum vorgesehen sind.
wobei jeder Ultraschallwandler (17a, 17b) mit einem Durchflussstabilisator (15a, 15b) versehen ist, wobei jeder Durchflussstabilisator ein Fluidablenkelement aufweist, um im Betrieb das in der Fluidleitung um den jeweiligen Ultraschallwandler fließende Fluid abzulenken, wenn sich der Durchflussstabilisator (15a, 15b) in der Fluidleitung (4) vor dem Ultraschallwandler (17a, 17b) befindet, wobei das Ablenkelement im Wesentlichen als eine Kuppel (37) mit einem Scheitelpunkt der Kuppel in eine vom Ultraschallwandler weg weisende Richtung ausgebildet ist; und
wobei im Durchflussstabilisator ein Fluidabflusskanal (38) am Scheitelpunkt der Kuppel (37) vorgesehen ist und eine Vielzahl von Fluidabflusskanälen (38, 39a, 39b, 39c, 39d) vorgesehen sind, die sich im Wesentlichen radial um die Grundfläche der Kuppel (37) herum erstrecken.

2. Ultraschallfluiddurchflussmesser (1) gemäß Anspruch 1, wobei die Fluidleitung (4) im Wesentlichen rotationssymmetrisch ist.

3. Ultraschallfluiddurchflussmesser (1) gemäß einem vorhergehenden Anspruch, wobei der erste und der zweite Ultraschallwandler (17a, 17b) im Wesentlichen konzentrisch innerhalb des Innenumfangs der Fluidleitung (4) angeordnet sind.

4. Ultraschallfluiddurchflussmesser (1) gemäß einem vorhergehenden Anspruch, wobei jede Halterung (16a, 16b) eine Vielzahl von sich radial erstreckenden Stegen (23) aufweist, die um den zugehörigen Ultraschallwandler (17a, 17b) herum angeordnet sind.

5. Ultraschallfluiddurchflussmesser (1) gemäß einem vorhergehenden Anspruch, wobei die Halterung (16a, 16b) eine oder mehrere Fluidöffnungen (21a, 21b, 21c, 21d) definiert, die sich durch die Halterung hindurch in einer im Wesentlichen parallel zur Längsachse der Fluidleitung (4) verlaufenden Richtung erstrecken.

6. Ultraschalldurchflussmesser gemäß Anspruch 5, wobei die Fluidöffnungen (21a, 21b, 21c, 21d) rotationssymmetrisch um die Längsmittelachse der Fluidleitung (4) angeordnet sind.

7. Ultraschalldurchflussmesser (1) gemäß einem vorhergehenden Anspruch, wobei innerhalb der Durchflussleitung (4) der Fluiddurchflussmesser im Wesentlichen symmetrisch um eine Ebene in der Mitte zwischen dem ersten und dem zweiten Ultraschallwandler (17a, 17b) ist, wobei sich die Ebene quer zur Längsmittelachse der Fluidleitung (4) erstreckt.

8. Ultraschalldurchflussmesser (1) gemäß einem der vorhergehenden Ansprüche, wobei die Kuppel (37) eine längliche Kuppel mit einer Rotationsfläche ist, die aus einer um die Längsachse der Fluidleitung (4) gedrehten Wölbung besteht.

9. Ultraschalldurchflussmesser (1) gemäß Anspruch 8, wobei der Durchflussstabilisator (15a, 15b) mehrere sich radial erstreckende Stützrippen oder -zweige (36) umfasst und die Krümmung einen Radius zwischen 350 % und 450 % der Dicke der sich radial erstreckenden Stützrippen oder -zweige (36) aufweist.

10. Ultraschalldurchflussmesser (1) gemäß einem der vorhergehenden Ansprüche, wobei der Durchmesser einer Grundfläche der Kuppel (37) im Wesentlichen gleich oder größer als der Durchmesser einer kreisförmigen Öffnung ist, in der der Ultraschallwandler (17a, 17b) vorgesehen ist.

11. Ultraschalldurchflussmesser (1) gemäß einem vorhergehenden Anspruch, wobei jeder Durchflussstabilisator (15a, 15b) an jede Halterung (16a, 16b) angrenzend angeordnet ist, wobei jeder Fluiddurchflussstabilisator (15a, 15b) eine oder mehrere Fluidöffnungen umfasst oder definiert, die sich durch den Fluiddurchflussstabilisator in einer Richtung parallel zur Längsachse der Fluidleitung (4) und ausgerichtet mit den Fluidöffnungen in der Halterung (16a, 16b) erstrecken.

12. Ultraschalldurchflussmesser (1) gemäß Anspruch 1, wobei die mit den jeweiligen Ultraschallwandlern verknüpften Halterungen (16a, 16b) so ausgelegt sind, dass die jeweiligen Ultraschallwandler (17a, 17b) vom Innenumfang der Fluidleitung (4) des Ultraschalldurchflussmessers beabstandet sind, wobei jede der Stützbefestigungen (16a, 16b) ein Gehäuse (22) zum Aufnehmen des jeweiligen Ultraschallwandlers (17a, 17b) und eine Vielzahl von sich radial erstreckenden Stegen (21a, 21b, 21c, 21d) aufweist, die um das Gehäuse herum vorgesehen sind.

13. Durchflussstabilisator (15a, 15b) für einen Ultraschalldurchflussmesser (1) gemäß einem der Ansprüche 1 bis 11, wobei der Stabilisator (15a, 15b) ein Fluidablenkelement zum Ablenken von Fluid enthält, wobei das Ablenkelement im Wesentlichen als eine Kuppel (37) ausgebildet ist, der Stabilisator ferner einen am Scheitelpunkt der Kuppel (37) vorgesehenen Fluidabflusskanal und eine Vielzahl von Fluidabflusskanälen (38, 39a, 39b, 39c, 39d) enthält, die sich im Wesentlichen radial um die Grundfläche der Kuppel (37) herum erstrecken.

## Revendications

1. Débitmètre (1) à ultrasons pour fluide, le débitmètre comprenant :
un conduit (4) de fluide doté d'une entrée et d'une sortie (5, 6), le conduit de fluide étant délimité par une périphérie intérieure ; et
un premier et un second transducteur ultrasonique (17a, 17b) destinés à mesurer un débit de fluide dans le conduit (4) de fluide ; les premier et second transducteurs ultrasoniques (17a, 17b) étant disposés en alignement face à face ; et les premier et second transducteurs ultrasoniques (17a, 17b) étant disposés à l'intérieur du conduit (4) de fluide à l'écart de ladite périphérie intérieure, et chacun des premier et second transducteurs ultrasoniques (17a, 17b) étant soutenu par un support (16a, 16b) de soutien associé, et une pluralité d'orifices (21a, 21b, 21c, 21d) à fluide étant ménagée autour de chaque transducteur ultrasonique (17a, 17b),
chaque transducteur ultrasonique (17a, 17b) étant muni d'un stabilisateur (15a, 15b) d'écoulement, chaque stabilisateur d'écoulement incluant un élément déflecteur de fluide destiné à dévier, en cours d'utilisation, un fluide s'écoulant dans le conduit de fluide autour du transducteur ultrasonique respectif lorsque le stabilisateur (15a, 15b) d'écoulement est situé dans le conduit (4) de fluide en amont du transducteur ultrasonique (17a, 17b), l'élément déflecteur étant formé sensiblement comme un dôme (37), un sommet du dôme étant orienté à l'opposé du transducteur ultrasonique ; et
un passage (38) de vidange de fluide étant ménagé, dans le stabilisateur d'écoulement, au sommet du dôme (37) et une pluralité de passages (38, 39a, 39b, 39c, 39d) de vidange de fluide étant ménagée, s'étendant sensiblement radialement autour de la base du dôme (37).

2. Débitmètre (1) à ultrasons pour fluide selon la revendication 1, le conduit (4) de fluide présentant sensiblement une symétrie de rotation.

3. Débitmètre (1) à ultrasons pour fluide selon l'une quelconque des revendications précédentes, les premier et second transducteurs ultrasoniques (17a, 17b) étant disposés sensiblement concentriquement à l'intérieur de la périphérie intérieure du conduit (4) de fluide.

4. Débitmètre (1) à ultrasons pour fluide selon l'une quelconque des revendications précédentes, chaque support (16a, 16b) de soutien comprenant une pluralité de toiles (23) s'étendant radialement disposées autour dudit transducteur ultrasonique (17a, 17b) associé.

5. Débitmètre (1) à ultrasons pour fluide selon l'une quelconque des revendications précédentes, le support (16a, 16b) de soutien définissant un ou plusieurs orifices (21a, 21b, 21c, 21d) à fluide s'étendant à travers le support de soutien dans une direction sensiblement parallèle à l'axe longitudinal du conduit (4) de fluide.

6. Débitmètre à ultrasons selon la revendication 5, les orifices (21a, 21b, 21c, 21d) à fluide étant disposés avec une symétrie de rotation autour de l'axe longitudinal central du conduit (4) de fluide.

7. Débitmètre (1) à ultrasons selon l'une quelconque des revendications précédentes, le débitmètre pour fluide étant sensiblement symétrique, à l'intérieur du conduit (4) d'écoulement, par rapport à un plan situé à mi-distance entre les premier et second transducteurs ultrasoniques (17a, 17b), le plan s'étendant transversalement à l'axe longitudinal central du conduit (4) de fluide.

8. Débitmètre (1) à ultrasons selon l'une quelconque des revendications précédentes, le dôme (37) étant un dôme allongé présentant une surface de révolution formée d'une courbe ayant décrit une rotation autour de l'axe longitudinal du conduit (4) de fluide.

9. Débitmètre (1) à ultrasons selon la revendication 8, le stabilisateur (15a, 15b) d'écoulement comprenant plus d'une nervure ou branche porteuse (36) s'étendant radialement et ladite courbe présentant un rayon compris entre 350% et 450% de l'épaisseur desdites nervures ou branches porteuses (36) s'étendant radialement.

10. Débitmètre (1) à ultrasons selon l'une quelconque des revendications précédentes, le diamètre d'une base dudit dôme (37) étant sensiblement égal ou supérieur au diamètre d'un orifice circulaire dans lequel est placé ledit transducteur ultrasonique (17a, 17b).

11. Débitmètre (1) à ultrasons selon l'une quelconque des revendications précédentes, chaque stabilisateur (15a, 15b) d'écoulement étant disposé au voisinage de chaque support (16a, 16b) de soutien, chaque stabilisateur (15a, 15b) d'écoulement de fluide comprenant ou définissant un ou plusieurs orifices à fluide s'étendant à travers le stabilisateur d'écoulement de fluide dans une direction parallèle à l'axe longitudinal du conduit (4) de fluide et en alignement avec les orifices à fluide dans le support (16a, 16b) de soutien.

12. Débitmètre (1) à ultrasons selon la revendication 1, les supports (16a, 16b) de soutien associés aux transducteurs ultrasoniques respectifs étant configurés pour écarter les transducteurs ultrasoniques respectifs (17a, 17b) de la périphérie intérieure du conduit (4) de fluide du débitmètre à ultrasons, chacun des supports (16a, 16b) de soutien comprenant un réceptacle (22) destiné à recevoir le transducteur ultrasonique respectif (17a, 17b) et une pluralité de toiles (21a, 21b, 21c, 21d) s'étendant radialement placées autour dudit réceptacle.

13. Stabilisateur (15a, 15b) d'écoulement destiné à un débitmètre (1) à ultrasons selon l'une quelconque des revendications 1 à 11, le stabilisateur (15a, 15b) comprenant un élément déflecteur de fluide destiné à dévier du fluide, l'élément déflecteur étant formé sensiblement comme un dôme (37), le stabilisateur comprenant en outre un passage de vidange de fluide ménagé au sommet du dôme (37) et une pluralité de passages (38, 39a, 39b, 39c, 39d) de vidange de fluide s'étendant sensiblement radialement autour de la base du dôme (37).
